# EUROPÄISCHE PATENTSCHRIFT

(11) **EP 0 413 116 B1**
(45) Veröffentlichungstag und Bekanntmachung des Hinweises auf die Patenterteilung: **24.03.1993**
(21) Anmeldenummer: 90112174.9
(22) Anmeldetag: 27.06.1990
(51) Int. Cl.: B60K 20/02, F16H 59/04

(54) **Schaltvorrichtung**
Gear change device
Dispositif de changement de vitesse

(30) Priorität: 18.08.1989 DE 3927250
(43) Veröffentlichungstag der Anmeldung: 20.02.1991
(73) Patentinhaber: Dr.Ing.h.c. F. Porsche Aktiengesellschaft, 70435 Stuttgart (DE)
(72) Erfinder: Raff, Friedrich, D-7147 Eberdingen 3 (DE); Maier, Ulrich, D-7149 Freiberg/N. (DE)

(56) Entgegenhaltungen:
- DE-A- 3 410 938
- DE-A- 3 717 675
- DE-B- 2 136 792

## Beschreibung

Die Erfindung betrifft eine Schaltvorrichtung nach dem Oberbegriff des Patentanspruchs 1.

Bei der nichtvorveröffentlichten DE-A-38 07 881 ist der Wählhebel funktionsgerecht aus einer ersten Schaltgasse in eine zweite Schaltgasse und vice versa verstellbar. Ist der Wählhebel in der ersten Schaltgasse, wirkt er mit einer Übertragungseinrichtung zusammen, die einen die Betriebsstufen und automatisch sich schaltende Gänge des Getriebes mechanisch übertragenden Betätigungshebel umfaßt. Dieser Betätigungshebel verläuft außerhalb eines Gehäuses der Schaltvorrichtung und ist zur Fahrbahn hin ausgerichtet. Wird der Wählhebel in die zweite Schaltgasse umgeschaltet, ist er von der Übertragungseinrichtung getrennt und der Betätigungshebel nicht gegen eine unerwünschte Verstellung, z. B. aus der D-Stellung heraus gesichert.

Aufgabe der Erfindung ist es, an der Schaltvorrichtung im Bereich der Übertragungseinrichtung solche Vorkehrungen zu treffen, daß die Übertragungsvorrichtung stets sicher mit dem Wählhebel zusammenwirkt.

Erfindungsgemäß wird diese Aufgabe durch die kennzeichnenden Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, daß die Sperreinrichtung die Übertragungseinrichtung dann sichert, wenn der Wählhebel in die zweite Schaltgasse umgeschaltet ist. Hierdurch wird sicher vermieden, daß die Übertragungseinrichtung unerwünscht aus ihrer vorgesehenen Lage, z. B. durch Fahrzeugschwingungen oder durch auf den außerhalb der Schaltvorrichtung angeordneten Betätigungshebel wirkende Fahrtwiderstände der Fahrbahn, verstellt wird. Die Sperreinrichtung, namentlich ihr Sperrglied, ist ein einfaches Bauteil, das sich leicht ohne besonderen Raumanspruch am Mitnehmer anordnen läßt. Sinngemäß trifft dies auch für das feststehende Bauteil zu, in das das Sperrglied in Abhängigkeit der Schaltgassen-Stellung des Wählhebels eingreift.

In der Zeichnung wird ein Ausführungsbeispiel der Erfindung gezeigt, das nachstehend näher beschrieben ist.
Es zeigt
Fig. 1 einen Querschnitt durch eine Schaltvorrichtung mit einem in zwei Schaltgassen verschwenkbaren Wählhebel,
Fig. 2 ein Schaltschema des Wählhebels,
Fig. 3 einen Schnitt nach der Linie III-III der Fig. 1,
Fig. 4 eine Einzelheit X der Fig. 1 in größerem Maßstab.

Mit einer Schaltvorrichtung 1 ist ein durch ein elektronisches Steuergerät ansteuerbares automatisches Getriebe für ein Kraftfahrzeug beeinflußbar: Steuergerät, automatisches Getriebe und Kraftfahrzeug sind nicht näher dargestellt; es wird hierzu auf die als Stand der Technik genannte DE-A 38 07 881 verwiesen.

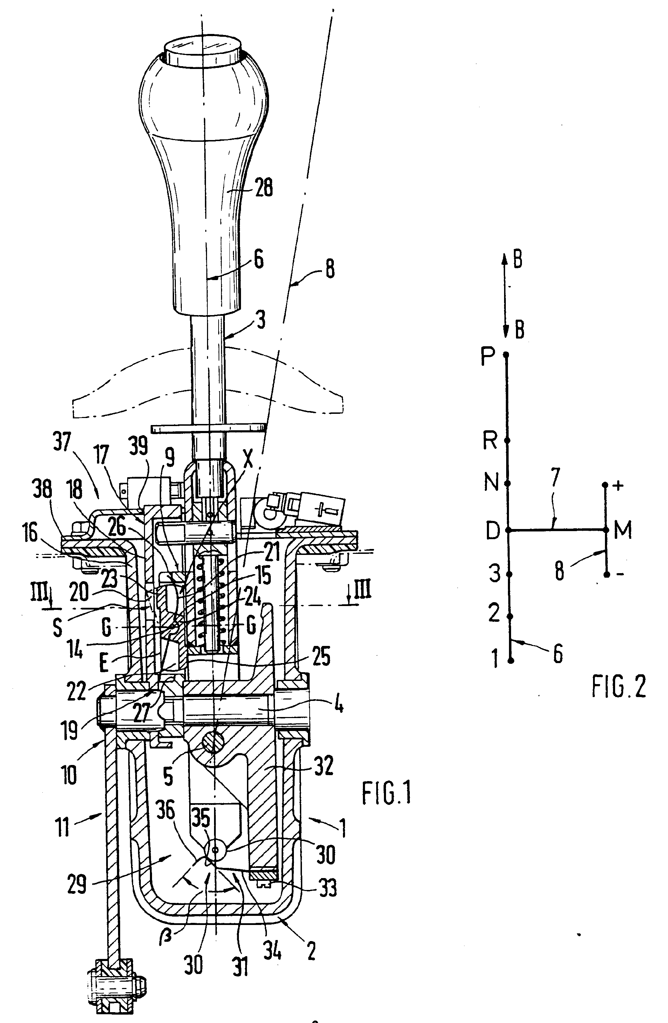

Die Schaltvorrichtung 1 umfaßt ein im Querschnitt U-förmiges, behälterartiges Gehäuse 2 aus Kunststoff, Leichtmetallguß oder dergleichen, in dem ein Wählhebel 3 einerseits an einem quer zur Fahrzeuglängsrichtung B-B verlaufenden Bolzen 4 und andererseits an einem in Fahrzeuglängsrichtung B-B ausgerichteten Bolzen 5 gelagert ist. Durch diese kardanische Lagerung ist der Wählhebel 3 in einer ersten Schaltgasse 6 - in Fahrzeuglängsrichtung B-B - verschwenkbar, in der verschiedene Stellungen P = Parken, R = Rückwärtsgang, N = Neutral-0, D = Drive mit 4. Gang, 3 = 3. Gang, 2 = 2. Gang, 1 = 1. Gang des automatischen Getriebes wählbar sind. Der Wählhebel 3 ist aber auch noch aus der Stellung D der ersten Schaltgasse 6 heraus über eine Quergasse 7 in eine zweite Schaltgasse 8 umschaltbar. Die erste Schaltgasse 6 und die zweite Schaltgasse 8 verlaufen parallel zueinander (Fig. 2), wobei diese mit der Quergasse 7 ein Doppel-T bilden.

Nach Einführung des Wählhebels 3 in die zweite Schaltgasse 8 ist letzterer ebenfalls in Fahrzeuglängsrichtung B-B verschwenkbar. Hierbei wird durch ein einmaliges Verschwenken des Wählhebels 3 aus einer Mittelstellung M heraus, in Plusrichtung (+) ein Hochschalten um jeweils einen Gang bewerkstelligt - Schrittschaltung -; das Rückschalten - auch um jeweils einen Gang - erfolgt durch Verschwenken des Hebels in Minus-Richtung (-). Der Wählhebel 3 wird nach jedem Schaltvorgang in Plus- oder Minus-Richtung selbsttätig in seine neutrale Mittelstellung M zurückgestellt.

In der ersten Schaltgasse 6 wirkt der Wählhebel 3 mit einem Mitnehmer 9 einer Übertragungseinrichtung 10 zusammen, die mittels eines außerhalb des Gehäuses 2 verlaufenden und zur Fahrbahn hin ausgerichteten Betätigungshebel 11 die Betriebsstellungen und automatischen Stellungen des Getriebes mechanisch schaltet. Die Mitnehmer 9 und der Wählhebel 3 sind drehbar auf dem Bolzen 4 gelagert, wobei der Mitnehmer 9 den Wählhebel 3 in der ersten Schaltgasse 6 mit einem gabelartigen Abschnitt 12 formschlüssig umgibt; Wählhebel 3 und Übertragungseinrichtung 10 sind in Wirkverbindung.

Wird der Wählhebel 3 über den Bolzen 4 in die zweite Schaltgasse 8 verschwenkt, ist er vom Mitnehmer 9 getrennt und eine Sperreinrichtung 13 wird wirksam, indem sie die Übertragungseinrichtung 10 gegen Relativbewegungen auf dem Bolzen 4 sichert. Die Sperreinrichtung 13 umfaßt ein mittels eines horizontalen und in Fahrzeuglängsrichtung B-B ausgerichteten Zapfens 14 drehbar am Mitnehmer 9 gelagertes Sperrglied 15, wobei sich der Mitnehmer 9 senkrecht zum Bolzen 4 erstreckt. Zwischen einer aufrechten Wand 16 des Gehäuses 2 und dem Mitnehmer 9 erstreckt sich ein feststehendes Bauteil 17 mit einer Platte 18, die senkrecht zum Bolzen 4 ausgerichtet ist, letzteren mit einer Bohrung 19 umgibt und eine Öffnung 20 aufweist. Die Öffnung 20 ist gegenüber dem Sperrglied 15 angeordnet, das in Abhängigkeit der Schaltgassen-Stellung 6 oder 8 des Wählhebels 3 und unter der Wirkung einer Feder 21 aus einer Entriegelstellung E in eine Sperrstellung S verschwenkbar ist; in der Sperrstellung S greift das Sperrglied 15 in die Öffnung 17 ein.

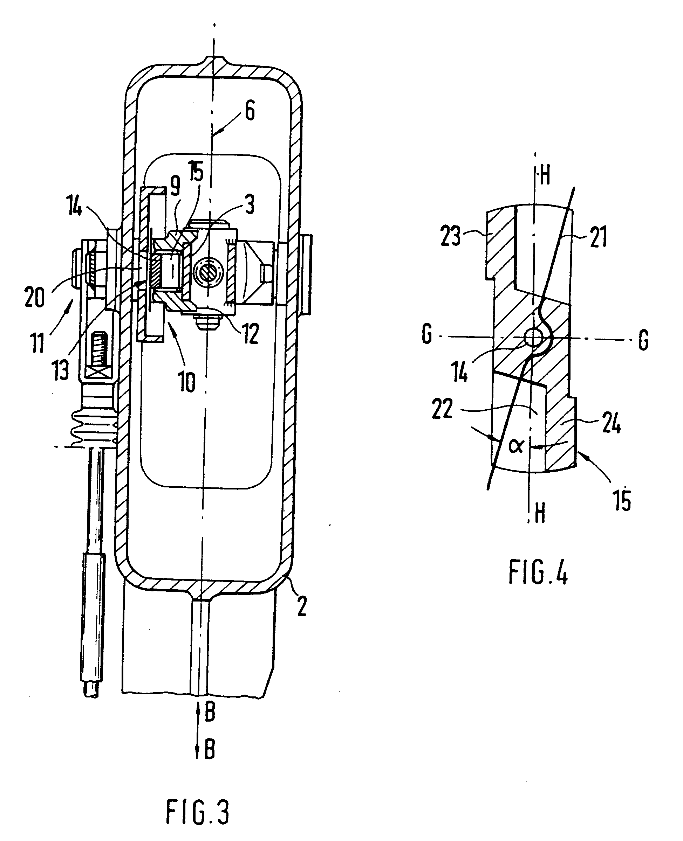

Das Sperrglied 15 weist beiderseits einer den Zapfen 14 schneidenden Mittelquerebene G-G Klinken 22, 23 auf, die spiegelbildlich von einer den Zapfen 14 umgebenden Verdickung 24 weggeführt sind. Die obere Klinke 23 wirkt mit der Öffnung 20 zusammen; die untere Klinke 23 mit einem Abschnitt des Wählhebels 3. Die Feder 21 ist eine Blattfeder, die die Verdickung 24 unter Umgehung des Zapfens 14 durchdringt, in Längsrichtung der Klinken 22, 23 ausgerichtet ist und sich in der Entriegelstellung E des Sperrglieds 15 an einer oberen Abstützrampe 26 des Mitnehmers 9 unter Vorspannung abstützt; in der Sperrstellung S wirkt die Feder 21 mit geringer Vorspannung sowohl mit der Abstützrampe 26 wie auch mit einer weiteren Abstützrampe 27 zusammen. In Fig. 4 ist das Sperrglied 15 mit der Feder 21 als vorgefertigtes Bauteil dargestellt. Danach ragt die Feder 21 über die Klinke 22, 23 hinaus und ist schräg - Winkel α- zur Längsrichtung H-H dieser Klinken angeordnet. Diese Anordnung bewirkt in der Entriegelstellung E die definierte Vorspannung der Feder 21.

Auf der einem Handgriff 28 des Wählhebels 3 abgekehrten Seite 29 ist eine Federrastvorrichtung 30 vorgesehen, die den Wählhebel 3 in den Schaltgassen 6 und 8 lagemäßig festlegt. Die Federrastvorrichtung 30 wird gebildet durch eine Rolle 30 am Wählhebel 3 und eine Blattfeder 31 an einem in bezug auf den Wählhebel 3 festen Bauteil 32. Die Blattfeder 31 ist unter Vermittlung einer Schraube 33 am Bauteil 32 gehalten und weist einen Federabschnitt 34 auf, an dessen freiem Ende im Winkel ß zueinander verlaufende Abwinklungen 35, 36 vorgesehen sind. In der Schaltgasse 6 liegt die Rolle 30 an der Abwinklung 35 an; in der Schaltgasse 8 an der Abwinklung 36. Bei 37 ist ein Deckel 38 des Gehäuses 2 angedeutet, der eine Öffnung 39 aufweist, in die das Bauteil 17 hineinragt und auf diese Weise festgesetzt ist.

## Patentansprüche

1. Schaltvorrichtung für ein durch ein elektronisches Steuergerät beeinflußtes automatisches Getriebe eines Kraftfahrzeugs mit einem Wählhebel, durch dessen Verschwenken in einer ersten Schaltgasse verschiedene Betriebsstufen und sich automatisch schaltende Gänge mittels einer Übertragungseinrichtung wählbar sind, wobei der Wählhebel über eine Quergasse in eine zur ersten Schaltgasse parallele Schaltgasse umschaltbar ist, in der mit dem Wählhebel durch einmaliges Verschwenken aus einer Mittellage heraus in die eine Richtung eine Hochschaltung und in die entgegengesetzte Richtung eine Rückschaltung jeweils um einen Gang bewerkstelligbar ist, dadurch gekennzeichnet, daß der Wählhebel (3) und eine mit letzterem in der ersten Schaltgasse (6) zusammenwirkender Mitnehmer (9) der Übertragungseinrichtung (10) drehbar auf einem quer zur Fahrzeuglängsrichtung (B-B) verlaufenden Bolzen (4) gelagert sind und daß zur Festsetzung der Übertragungsrichtung (10) in der zweiten, vom Mitnehmer (9) unabhängigen Schaltgasse (8) des Wählhebels (3) eine Sperreinrichtung (13) wirksam wird.

2. Schaltvorrichtung nach Anspruch 1, dadurch gekennzeichnet, daß die Sperreinrichtung (12) ein am Mitnehmer (9) mittels eines Zapfens (14) drehbar angeordnetes Sperrglied (15) umfaßt, das unter der Wirkung einer Feder und in Abhängigkeit der Schaltgassen-Stellung (6, 8) der Wählhebel (3) aus einer Entriegelstellung (E) in eine Sperrstellung (S) verschwenkbar ist.

3. Schaltvorrichtung nach Anspruch 2, dadurch gekennzeichnet, daß das Sperrglied (15) in seiner Sperrstellung (S) in eine Öffnung (20) einer Platte (18) eines feststehenden Bauteils (17) der Schaltvorrichtung (1) eingreift.

4. Schaltvorrichtung nach den Ansprüchen 1 und 3, dadurch gekennzeichnet, daß die Platte (18) senkrecht zum Bolzen (4) verläuft und ihn mit einer Bohrung (19) umgibt.

5. Schaltvorrichtung nach Anspruch 4, dadurch gekennzeichnet, daß die Platte (18) sich benachbart einer aufrechten Wand (16) eines Gehäuses (2) der Schaltvorrichtung (1) erstreckt.

6. Schaltvorrichtung nach Anspruch 2, dadurch gekennzeichnet, daß das Sperrglied (15) beiderseits einer den Zapfen (14) schneidenden Mittelquerebene (G-G) von einer Verdickung (24) weggeführte, spiegelbildlich angeordnete Klinken (22, 23) aufweist.

7. Schaltvorrichtung nach Anspruch 6, dadurch gekennzeichnet, daß die obere Klinke (23) mit der Öffnung (20) und die untere Klinke (22) mit dem Wählhebel (3) zusammenwirkt.

8. Schaltvorrichtung nach Anspruch 2, dadurch gekennzeichnet, daß die Feder (21) eine Blattfeder ist, die die Verdickung (24) durchdringend, sich in Längsrichtung (H-H) der Klinken (22, 23) erstreckt und mit Abstützrampen (26, 27) des Mitnehmers (9) zusammenwirkt.

9. Schaltvorrichtung nach Anspruch 8, dadurch gekennzeichnet, daß die Blattfeder (Feder 21) um den Zapfen (14) herumgeführt ist.

10. Schaltvorrichtung nach einem oder mehreren der vorangehenden Ansprüche, dadurch gekennzeichnet, daß der Mitnehmer (9) den Wählhebel (3) mit einem gabelartigen Abschnitt (12) umschließt.

11. Schaltvorrichtung nach einem oder mehreren der vorangehenden Ansprüche, dadurch gekennzeichnet, daß an der einem Handgriff (28) des Wählhebels (3) abgekehrten freien Seite eine Federrastvorrichtung (29) zur Festlegung des Wählhebels (3) in der ersten Schaltgasse (6) und der zweiten Schaltgasse (8) vorgesehen ist.

## Claims

1. A gear-shift device for an automatic gearbox -- controlled by an electronic control unit -- of a motor vehicle, with a selector lever, by the pivoting of which in a first gear-shift channel various operating stages and automatically shifting gears are selected by means of a transfer device, the selector lever being shiftable by way of a transverse channel into a gear-shift channel which is parallel to the first gear-shift channel and in which a shift up by a respective gear can be effected with the selector lever by pivoting once from a middle position in one direction and a shift down can be effected with the selector lever by pivoting in the opposite direction, characterized in that the selector lever (3) and an entrainment means (9) -- cooperating therewith in the first gear-shift channel (6) -- of the transfer device (10) are mounted rotatably on a pin (4) extending transversely to the longitudinal direction (B-B) of the vehicle, and a locking device (13) comes into effect to fix the transfer device (10) in the second gear-shift channel (8) -- independent of the entrainment means (9) -- of the selector lever (3).

2. A gear-shift device according to Claim 1, characterized in that the locking device (12) [sic] comprises a locking member (15) arranged rotatably on the entrainment means (9) by means of a pin (14) and pivotable from an unlocking position (E) into a locking position (S) under the action of a spring and as a function of the gear-shift-channel position of the selector levers [*sic*] (3).

3. A gear-shift device according to Claim 2, characterized in that in its locking position (S) the locking member (15) engages in an opening (20) in a plate (18) of a stationary component (17) of the gear-shift device (1).

4. A gear-shift device according to Claims 1 and 3, characterized in that the plate (18) extends at rights angles to the pin (4) and surrounds it with a bore (19).

5. A gear-shift device according to Claim 4, characterized in that the plate (18) extends adjacent to an upright wall (16) of a housing (2) of the gear-shift device (1).

6. A gear-shift device according to Claim 2, characterized in that the locking member (15) has pawls (22, 23) arranged in a mirror image and extending away from a thickened portion (24) on both sides of a median transverse plane (G-G) intersecting the pin (14).

7. A gear-shift device according to Claim 6, characterized in that the upper pawl (23) cooperates with the opening (20) and the lower pawl (22) with the selector lever (3).

8. A gear-shift device according to Claim 2, characterized in that the spring (21) is a leaf spring extending in the longitudinal direction (H-H) of the pawls (22, 23) so as to pass through the thickened portion (24) and cooperating with support ramps (26, 27) of the entrainment means (9).

9. A gear-shift device according to Claim 8, characterized in that the leaf spring (spring 21) passes around the pin (14).

10. A gear-shift device according to one or more of the preceding Claims, characterized in that the entrainment means (9) surrounds the selector lever (3) with a fork-like portion (12).

11. A gear-shift device according to one or more of the preceding Claims, characterized in that a spring-catch device (29) is provided at the free end remote from a handle (28) of the selector lever (3) for fixing the selector lever (3) in the first gear-shift channel (6) and the second gear-shift channel (8).

## Revendications

1. Dispositif de changement de vitesse pour une boîte de vitesses automatique, influencée par un appareil de commande électronique, d'un véhicule automobile, comportant un levier de sélection dont le pivotement dans une première voie de commutation permet de sélectionner différents crans de fonctionnement et des rapports commutant automatiquement, au moyen d'un dispositif de transmission, dans lequel le levier de sélection peut être commuté, par une voie transversale, dans une voie de commutation parallèle à la première voie de commutation, dans laquelle le levier de sélection permet, par pivotement unique, à partir d'une position centrale, de passer à un rapport supérieur, dans un sens et de rétrograder, dans le sens opposé, toujours d'une vitesse, caractérisé en ce que le levier de sélection (3) et un entraîneur (9), coopérant avec ce dernier, dans la première voie de commutation 6, du dispositif de transmission (10), sont montés tournants sur un axe (4), transversal à la direction longitudinale (B-B) du véhicule et en ce que, pour fixer le sens de transmission (10), un dispositif de blocage (13) opère dans la deuxième voie de commutation (8), indépendante de l'entraîneur (9), du levier de sélection (3).

2. Dispositif de changement de vitesse selon la revendication 1, caractérisé en ce que le dispositif de blocage (12) comporte un organe de blocage (15), monté tournant sur l'entraîneur (9), au moyen d'un tourillon (14), lequel organe de blocage peut pivoter, sous l'action d'un ressort et en fonction de la position des voies de commutation (6, 8) des leviers de sélection (3), à partir d'une position déverrouillée (E) dans une position verrouillée (S).

3. Dispositif de changement de vitesse selon la revendication 2, caractérisé en ce que l'organe de blocage (15) s'engage, dans sa position verrouillée (S), dans une ouverture (20) d'une plaque (18) d'un élément de construction (17) fixe du dispositif de changement de vitesse (1).

4. Dispositif de changement de vitesse selon les revendications 1 et 3, caractérisé en ce que la plaque (8) s'étend perpendiculairement à l'axe (4) et l'entoure par un alésage (19).

5. Dispositif de changement de vitesse selon la revendication 4, caractérisé en ce que la plaque (18) s'étend à proximité d'une paroi (16) verticale d'un boîtier (2) du dispositif de changement de vitesse (1).

6. Dispositif de changement de vitesse selon la revendication 2, caractérisé en ce que l'organe de blocage (15) comporte, de part et d'autre d'un plan transversal médian (G-G), coupant le tourillon (14), des cliquets (22, 23), partant d'une surépaisseur (24), disposés dans une symétrie en miroir.

7. Dispositif de changement de vitesse selon la revendication 6, caractérisé en ce que le cliquet (23) supérieur coopère avec l'ouverture (20) et le cliquet inférieur (22) avec le levier de sélection (3).

8. Dispositif de changement de vitesse selon la revendication 2, caractérisé en ce que le ressort (21) est un ressort à lame qui, traversant la surépaisseur (24), s'étend dans la direction longitudinale (H-H) des cliquets (22, 23) et coopère avec des rampes d'appui (26, 27) de l'entraîneur (9).

9. Dispositif de changement de vitesse selon la revendication 8, caractérisé en ce que le ressort à lame (ressort 21) passe autour du tourillon (14).

10. Dispositif de changement de vitesse selon une ou plusieurs des revendications précédentes, caractérisé en ce que l'entraîneur (9) entoure le levier de sélection (3) avec une partie (12) en forme de fourche.

11. Dispositif de changement de vitesse selon une ou plusieurs des revendications précédentes, caractérisé en ce que sur le côté libre, opposé à une poignée (28) du levier de sélection (3), il est prévu un dispositif d'accrochage à ressort (29) pour fixer le levier de sélection (3) dans la première voie de commutation (6) et la deuxième voie de commutation (8).
